# EUROPEAN PATENT SPECIFICATION

(11) **EP 1 146 537 B1**
(45) Date of publication and mention of the grant of the patent: **17.12.2008**
(21) Application number: 00966444.2
(22) Date of filing: 12.10.2000
(51) Int. Cl.: H01J 61/30, H01J 61/82, C04B 35/115

(54) **HIGH PRESSURE DISCHARGE LAMP ARC TUBE AND METHOD OF PRODUCING THE SAME**
HOCHDRUCKBOGENENTLADUNGSLAMPENRÖHRE UND DEREN HERSTELLUNGSVERFAHREN
TUBE A ARC DE LAMPE A DECHARGE HAUTE PRESSION ET SON PROCEDE DE FABRICATION

(30) Priority: 15.10.1999 JP 29418099; 05.10.2000 JP 2000306641
(43) Date of publication of application: 17.10.2001
(73) Proprietor: NGK INSULATORS, LTD., Nagoya-shi, Aichi-ken 467-8530 (JP)
(72) Inventor: MIYAZAWA, Sugio NGK Insulators, Ltd., Nagoya-shi, Aichi 467-8530 (JP); ASAI, Michio NGK Insulators, Ltd., Nagoya-shi, Aichi 467-8530 (JP)
(74) Representative: Paget, Hugh Charles Edward
(86) International application number: PCT/JP2000/007086
(87) International publication number: WO 2001/027966

(56) References cited:
- EP-A- 0 470 758
- JP-A- 8 017 396
- JP-A- 10 188 893
- US-A- 3 311 482
- US-A- 4 264 541
- US-A- 4 364 877
- US-A- 4 451 418
- PATENT ABSTRACTS OF JAPAN vol. 008, no. 115 (E-247), 29 May 1984 (1984-05-29) -& JP 59 029345 A (MATSUSHITA DENSHI KOGYO KK), 16 February 1984 (1984-02-16)

## Description

### Field of the Invention

The present invention relates to a discharge vessel for a high-intensity discharge lamp the discharge vessel having a capillary at each end thereof for holding an electrode

### Background of the Invention

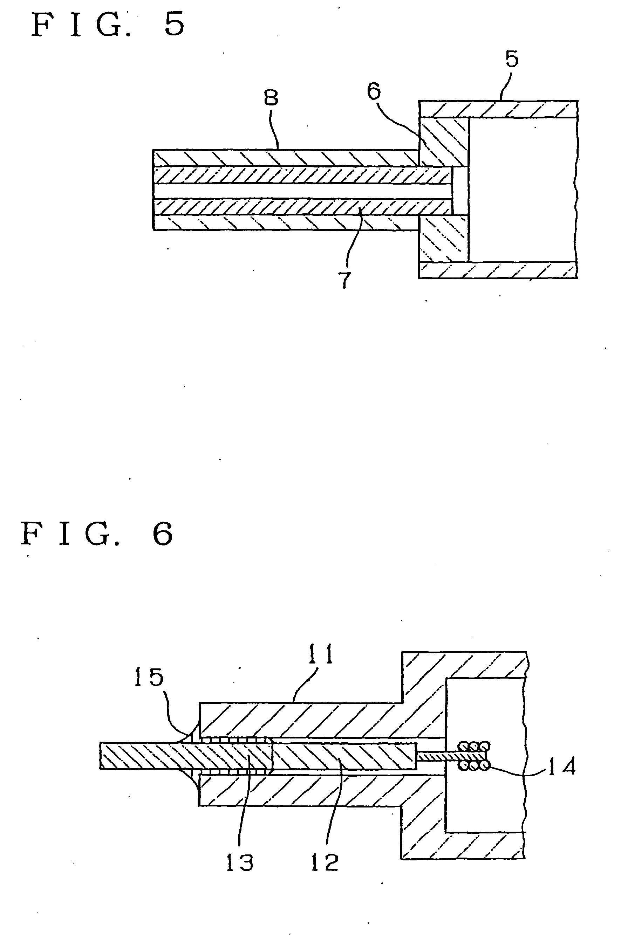

Ceramic made discharge vessel or chambers for high-intensity discharge lamps are generally classified into an integral type where the center body defining a discharge space and the capillary for holding an electrode are formed integral with each other and an assembly type which comprise the body and the capillary fabricated separately as two different components and assembled together. In either type, as shown in the explanatory cross sectional view of Fig. 6, an electrode is fabricated by an electrode material 12 with a discharge electrode 14 made of tungsten or the like joining to the distal end of a current conductor 13 made of niobium, molybdenum, or the like and inserted into capillary 11 made of an alumina based ceramic material or an alumina material before the gap between the electrode and the capillary is sealed air-tightly with a frit sealer 15 of a glass material.

The discharge vessel or chamber is then baked at its body and capillary simultaneously at a proper temperature.

As the discharge vessel or chamber of such a conventional capillary type is baked at a high temperature for increasing the permeability of light across its body, it will be declined in the physical strength. In particular, when the capillary is joined and sealed with the electrode, it may possibly crack. It is hence essential for prevention of any crack to control the frit sealer to a precise amount and increase the thickness or physical strength of the capillary.

However, the controlling of the amount of the frit sealer requires a highly precision technique while the increasing of the thickness of the capillary interrupts the down-sizing of a resultant discharge lamp.

US4264541 suggests to optimise the properties of the ceramic used for manufacturing a discharge vessel by establishing a temperature difference between the vessel's middle portion and its end portions at the time of sintering.

It is thus an object of the present invention, in view of the above aspects, to provide a method of fabricating a discharge vessel or chamber for a high-intensity discharge lamp capable of inhibiting the generation of any crack without controlling the frit sealer to a precise amount or increasing the thickness of the capillary.

### Summary of the Invention

We, the inventors, have studied on the sintering characteristic of a ceramic where the higher the sintering temperature, the greater the diameter of grains in the ceramic becomes thus decreasing the physical strength or the lower the sintering temperature, the smaller the diameter of grains in the ceramic becomes thus increasing the physical strength. As a result, an improved discharge vessel or chamber of a capillary type is developed which is minimized in the generation of cracks. As defined in claim 1 of the present invention, a method of fabricating a discharge vessel or chamber for a high-intensity discharge lamp having a center body arranged providing a discharge space therein and two capillaries provided for shutting up both end openings of the body and accepting a pair of electrodes respectively is provided wherein the center body and the capillaries are made of an alumina material or an alumina-based ceramic material. The average diameter of alumina grains in the capillaries preferably ranges from 10 micrometers to 25 micrometers.

### Brief Description of the Drawings

Fig. 1 is an explanatory cross sectional view of an electrode section of a discharge vessel or chamber for a high-intensity discharge lamp ;
Fig. 2 is a diagram showing the relation between the dosage of magnesium oxide, the average grain diameter, and the physical strength;
Fig. 3 is a flowchart showing a procedure of fabricating the discharge vessel or chamber shown in Fig. 1;
Fig. 4 is an explanatory cross sectional view of an electrode section fabricated according to the present invention;
Fig. 5 is an explanatory cross sectional view of an electrode section ; and
Fig. 6 is an explanatory cross sectional view of an electrode section of a conventional discharge vessel or chamber for a high-intensity discharge lamp.

### Description of the Numerals or Symbols

1...Discharge vessel or chamber, 2...Center body, 2a...Opening. 2b...Discharge space, 3...Capillary, 5...Center body, 6...Plug, 7...Capillary, 8...Tubular member, 9...Center body, 10...Capillary, 10a...Cover portion, 10b...Capillary portion

### Best Modes for embodying the Invention

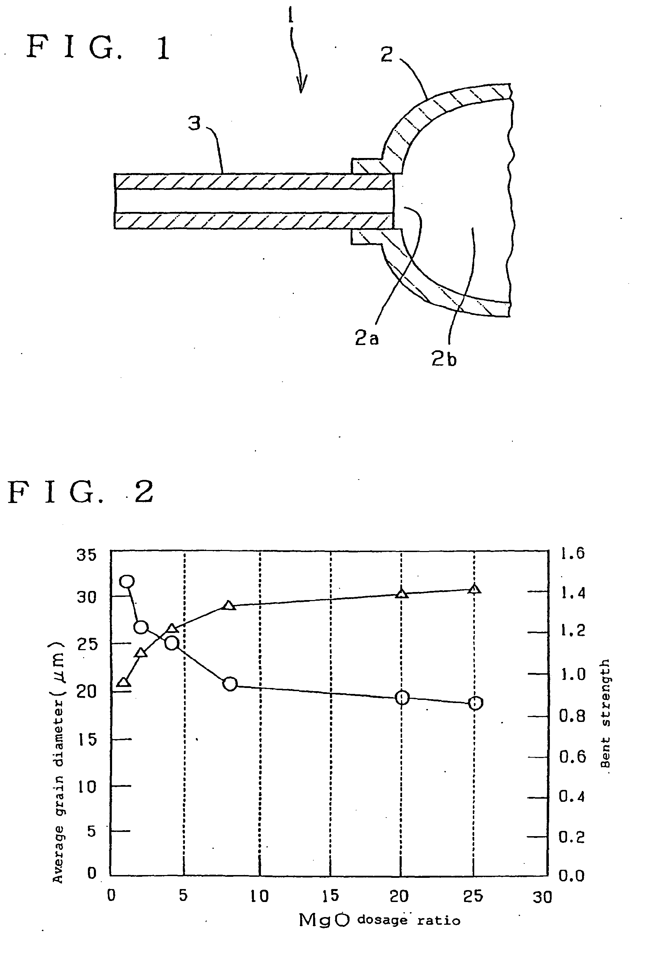

Some modes for embodying the present invention will be described in more detail referring to the relevant drawings. Fig. 1 is an explanatory cross sectional view of a electrode section of a discharge vessel or chamber of a high-pressure discharge lamp The discharge vessel or chamber 1 comprises a center body 2 having an opening 2a provided at each end thereof and a discharge space 2b defined therein and a pair of capillaries 3, each inserted into the opening 2a and having a tubular shape for accepting and holding an electrode material (not shown). The capillary 3 is doped with an amount of magnesium oxide substantially 20 times greater than that in the body 2 and its average diameter of alumina grains is decreased to as smaller as 19 micrometers than 32 micrometers in the body 2 for increasing the physical strength.

The doping of magnesium oxide permits the average diameter to be decreased, thus improving the physical strength. Accordingly, the generation of cracks during the installation of the electrode material will be prevented. It is hence unnecessary for the sealing to measure a precise amount of the frit sealer and fill the gap close to the center body with the frit sealer more than hitherto. It is also not needed to increase the thickness of the capillary, thus down-sizing the discharge lamp with much ease.

The dosage of magnesium oxide is not limited to 20 times greater than in the center body but may be within a range of the ratio shown in the diagram of Fig. 2 for the relation between the dosage, the average grain diameter, and the physical strength. At the ratio where the capillary 3 is greater in the dosage of magnesium oxide than the center body 2, it can be smaller in the average diameter but higher in the physical strength than the center body 2. If the ratio is not greater than 1.5 times, the physical strength may hardly increase. When the ratio exceeds 25 times, the strength is not increased in proportion with the dosage. Hence, the dosage is preferably within a range from 1. 5 times to 25 times. In Fig. 2, the horizontal axis represents the ratio in the dosage of magnesium oxide of the capillary 3 to the center body while the bend strength is a ratio to the center body.

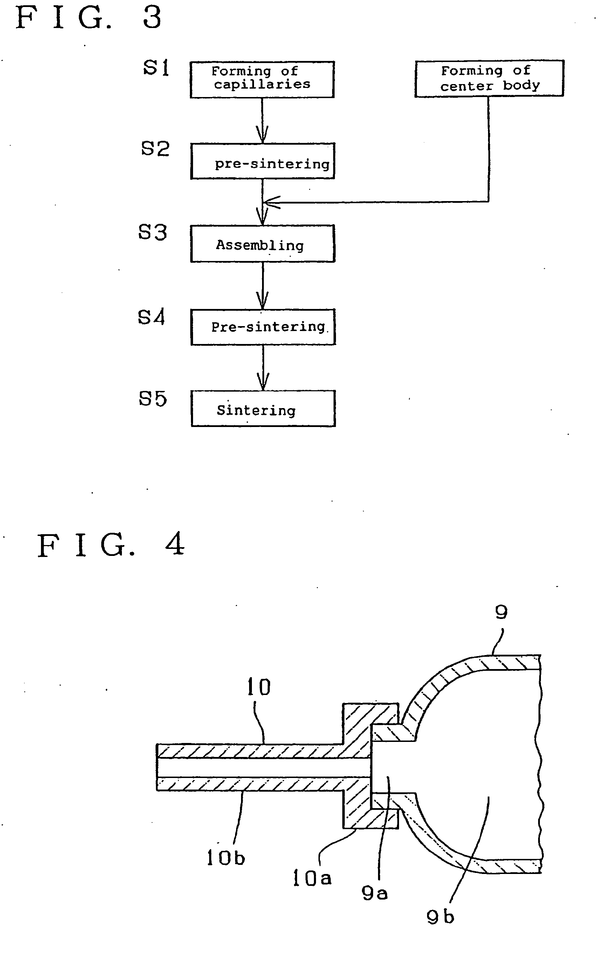

A method of fabricating the discharge vessel or chamber will now be descried referring to the flowchart of procedure shown in Fig. 3. The center body 2 and the capillary 3 are made of an alumina material or an alumina-based ceramic material. The procedure starts with forming the capillary 3 at Step 1 (S1). During this forming step, an amount of magnesium oxide, e.g. 20 time greater than of the center body 2, is doped. At S2, a green form is pre-baked at 1200 °C for three hours under the atmospheric conditions. The pre-sintering is followed by inserting at S3 the capillary 3 into the opening 2a of the center body 2 formed separately. Then, the assembly is pre-baked at 1200 °C for three hours. under the atmospheric conditions at S4. Finally, the same is baked at 1850 °C for three hours under the hydrogen atmosphere at S5.

The oxide dopant is not limited to magnesium oxide but maybe selectedfromyttriumoxide, zirconiumoxide, scandium oxide, lanthanum oxide, and their combination. Those like magnesium oxide also permit the diameter of grains to be minimized and the physical strength to be increased. The center body 2 and the capillary 3 may not be made of the same composition. Preferably, the capillary 3 may contain a metal material, which is used in the joint of an electrode material, in order to make its characteristic of thermal expansion equal to that of the metal material.

Fig. 4 is an explanatory cross sectional view of an electrode section fabricated according to the present invention. A center body 9 has an opening 9a provided at each of both, left and right, ends of a discharge space 9b thereof. Each the opening 9a of the body 9 is shut up with a capillary 10 in which an electrode material (not shown) is inserted and secured by sealing. The capillary 10 comprises a cover portion 10a for closing the opening 9a of the body 9 and a capillary portion 10b extending outwardly and vertically from the center of the cover portion 10a.

A method of fabricating according to the patent invention comprises the steps of forming the center body 9 and the capillary 10 of an alumina material or an alumina-based ceramic material and after pre-sintering, sintering the center body 9 at 1850 °C. The capillary 10 after formed is pre-baked at 1200 °C to 1400 °C. Then, both are joined to each other and baked at 1700 °C. The joining is made by the cover portion 10a inserted into the opening 9a and shrunk-on joining to the center body 9.

As the sintering temperature of the center body 9 is 1850 °C and that of the capillary 10 is 1700 °C, i.e. the center body 9 is baked at the higher temperature, the average diameter of alumina grains in the center body 9 can be increased as great as 35 micrometers, hence increasing the permeability of light and improving the optical properties. On the other hand, the capillary 10 is baked at the lower temperature and its average diameter of alumina grains can be as small as 25 micrometers. Using the sintering temperature of 1850 °C, the physical strength can be increased, for instance, from 29 kg/cm² to 38 to 45 kg/cm². This will prevent the generation of cracks on the frit sealer during the sealing of the electrode. If the capillary 10 has an average grain diameter greater than 25 micrometers, its physical strength may be declined. When lower than 10 micrometers, the other properties including the resistance to corrosion may be degraded. Preferably, the average diameter ranges from 10 to 25 micrometers.

Fig. 5 illustrates a center body 5 of a cylindrical shape that has two openings provided in both ends thereof, each the opening shut up with a ring-like plug 6. A capillary 7 is inserted into the center hole of the opening. A tubular member 8 is fitted onto the capillary 7, thus forming a double-capillary structure.

The body 5, the plug 6, and the capillary 7 are assembled and joined by a conventional sintering method, such as a shrunk-on method of sintering at 1850 °C, which is based on a difference in the shrinkage. After the sintering step, the tubular member 8 is fitted onto the capillary 7 and subjected to a re-sintering process. For example, the tubular member 8 is baked at 1200 °C, fitted onto the capillary 7, and baked again at 1700 °C for shrunk-on joining with the capillary 7.

This can increase the physical strength of the capillary, hence permitting a conventional arrangement of the discharge lamp to be increased in the physical strength and preventing the generation of cracks.

### Applicability to Industries

The present invention according to claim 1 allows the center body and the capillary to be different in the sintering temperature so that the average diameter of grains in the capillary can be smaller than that in the center body. As a result, the physical strength of the capillary can be increased thus preventing the generation of cracks during the sealing with the electrode.

## Claims

1. A method of fabricating a discharge vessel for a high-intensity discharge lamp, the vessel having a center body (9) providing a discharge space therein and having two end openings (9a) and capillaries (10) for receiving electrodes respectively and closing the end openings (9a), the method comprising the steps of:-
(i) forming the center body (9) and the capillaries (10) as separate components from an alumina material or an alumina-based ceramic material,
(ii) pre-sintering the center body (9) and thereafter sintering the center body (9), and pre-baking the capillaries (10),
(iii) after step (ii), assembling the center body (9) and the capillaries (10) so that the capillaries close said end openings (9a),
(iv) after step (iii) integrally baking the assembly of said center body (9) and said capillaries (10) at a temperature lower than the sintering temperature of step (ii), thereby sintering the capillaries (10).

2. A method according to claim 1, wherein the average diameter of alumina grains in the capillaries after step (iv) is not greater than 25 µm and not less than 10 µm.

## Patentansprüche

1. Verfahren zur Herstellung eines Entladungsbehälters für eine Hochleistungsentladungslampe, wobei der Behälter einen zentralen Körper (9) aufweist, der einen darin vorliegenden Entladungsraum bereitstellt und zwei Endöffnungen (9a) sowie Kapillaren (10) zur Aufnahme von jeweiligen Elektroden und zum Verschließen der Endöffnungen (9a) aufweist, wobei das Verfahren die folgenden Schritte umfasst:
(i) die Ausbildung des zentralen Körpers (9) und der Kapillaren (10) als separate Komponenten aus einem Aluminiumoxidmaterial oder einem auf Aluminiumoxid basierenden Keramikmaterial,
(ii) das Vorsintern des zentralen Körpers (9) und das anschließende Sintern des zentralen Körpers (9) und das Vorbrennen der Kapillaren (10),
(iii) nach Schritt (ii) den Zusammenbau des zentralen Körpers (9) und der Kapillaren (10), sodass die Kapillaren die Endöffnungen (9a) verschließen,
(iv) nach Schritt (iii) das einstückige Brennen der Anordnung aus dem zentralen Körper (9) und der Kapillaren (10) bei einer Temperatur, die unter der Sintertemperatur von Schritt (ii) liegt, wodurch die Kapillaren (10) gesintert werden.

2. Verfahren nach Anspruch 1, wobei der mittlere Durchmesser von Aluminiumoxidkörnern in den Kapillaren nach Schritt (iv) nicht mehr als 25 µm und nicht weniger als 10 µm beträgt.

## Revendications

1. Procédé de fabrication d'une cuve de décharge pour une lampe à décharge haute-intensité, la cuve ayant un corps central (9) réalisant un espace de décharge dans celle-ci et ayant deux ouvertures d'extrémité (9a) et des capillaires (10) pour recevoir des électrodes, respectivement, et fermant les ouvertures d'extrémité (9a), le procédé comprenant les étapes consistant à:
(i) former le corps central (9) et les capillaires (10) comme des composants séparés à partir d'un matériau d'alumine ou d'un matériau céramique à base d'alumine,
(ii) pré-fritter le corps central (9) et fritter ensuite le corps central (9), et pré-cuire les capillaires (10),
(iii)après l'étape (ii), assembler le corps central (9) et les capillaires (10) de telle sorte que les capillaires ferment lesdites ouvertures d'extrémité (9a),
(iv) après l'étape (iii), cuire intégralement l'ensemble formé par ledit corps central (9) et lesdits capillaires (10) à une température inférieure à la température de frittage de l'étape (ii), en frittant ainsi les capillaires (10).

2. Procédé selon la revendication 1, où le diamètre moyen des grains d'alumine dans les capillaires après l'étape (iv) n'est pas supérieur à 25µm et n'est pas inférieur à 10 µm.
